(19) Europäisches Patentamt
European Patent Office
Office européen des brevets

(11) EP 3 115 405 B1

(12) # EUROPÄISCHE PATENTSCHRIFT

(45) Veröffentlichungstag und Bekanntmachung des Hinweises auf die Patenterteilung:
**27.12.2017 Patentblatt 2017/52**

(51) Int Cl.:
***C08K 3/38*** (2006.01) ***C08K 5/103*** (2006.01)

(21) Anmeldenummer: **15175788.7**

(22) Anmeldetag: **08.07.2015**

(54) **BORNITRID-HALTIGE THERMOPLASTISCHE ZUSAMMENSETZUNG**
BORON NITRIDE CONTAINING THERMOPLASTIC COMPOSITION
COMPOSITION THERMOPLASTIQUE CONTENANT DU NITRURE DE BORE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**11.01.2017 Patentblatt 2017/02**

(73) Patentinhaber: **Covestro Deutschland AG**
**51373 Leverkusen (DE)**

(72) Erfinder:
- **Sämisch, Birte**
  **50670 Köln (DE)**
- **Wehrmann, Rolf**
  **47800 Krefeld (DE)**
- **Heuer, Helmut Werner**
  **51371 Leverkusen (DE)**
- **Kuhlmann, Timo**
  **42799 Leichlingen (DE)**

(74) Vertreter: **Levpat**
**c/o Covestro AG**
**Gebäude 4825**
**51365 Leverkusen (DE)**

(56) Entgegenhaltungen:
**US-A1- 2008 153 959 US-A1- 2014 231 701**

- **DATABASE WPI Week 201203 Thomson Scientific, London, GB; AN 2011-Q64112 XP2751576, -& JP 2011 256359 A (SUMITOMO DOW LTD) 22. Dezember 2011 (2011-12-22)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft thermisch leitfähige, Bornitrid-haltige Polymerzusammensetzungen mit guter Fließfähigkeit und gleichzeitig guter Wärmeformbeständigkeit.

Herkömmlich wird bei thermoplastischen Zusammensetzungen zur Fließverbesserung BDP (Bisphenol A-Diphosphat) verwendet, und zwar in Mengen von bis zu mehr als 10,0 Gew.-%, um den gewünschten Effekt zu erzielen. Durch den Zusatz von BDP in hohen Mengen wird aber die Wärmeformbeständigkeit stark herabgesetzt.

Auch andere Mittel werden zur Verbesserung der Fließfähigkeit thermoplastischer Zusammensetzungen eingesetzt. Beispielsweise beschreibt die US 2008/153959 A1 Zusammensetzungen, enthaltend ein Polymer und Bornitrid, wobei die Fließfähigkeit der Zusammensetzungen durch die Zugabe 10 Gew.-% bis 30 Gew.-% eines Graphits verbessert wird. Derartige Zusammensetzungen sind aufgrund der hohen Gehalte an Graphit und Bornitrid generell schlecht zu verarbeiten. Weiterhin sind die beanspruchten Zusammensetzungen häufig elektrisch leitend, wodurch die Verwendung der Zusammensetzungen beschränkt ist.

Die Zugabe von Graphit ist jedoch keinesfalls eine Garantie dafür, dass eine gute Fließfähigkeit erzielt werden kann. Die US 7,723,419 B1 etwa beschreibt ebenfalls thermoplastische Zusammensetzungen, enthaltend Bornitrid und Graphit mit einer Partikelgröße von etwa 55 bis 65 µm, wobei die Zusammensetzungen aufgrund der Partikelgröße des sphärischen Bornitrids eine generell ungenügende Fließfähigkeit aufweisen. Eine Verbesserung der Fließfähigkeit der beanspruchten Zusammensetzungen wird nicht thematisiert.

Weitere Mittel zur Verbesserung der Fließfähigkeit sind beispielsweise niedermolekulare Kohlenwasserstoffharze sowie Olefine, wie in der US 2012/0217434 A1 für Zusammensetzungen, enthaltend ein Polymer, einen thermisch-isolierenden Füllstoff sowie einen thermisch-leitenden Füllstoff, wobei die thermische Leitfähigkeit der Zusammensetzungen mindestens 1 W/(m·K) aufweist, beschrieben.

US 2014/077125 A1 beschreibt eine Zusammensetzung, enthaltend Thermoplasten und in-situ hergestelltes Bornitrid, sowie einen harten Füllstoff. Eine Verbesserung der Fließfähigkeit der Zusammensetzung wird nicht thematisiert.

Überraschenderweise wurde nun gefunden, dass Diglycerolester zur Verbesserung der Fließfähigkeit Bornitrid-haltiger thermoplastischer Zusammensetzungen, insbesondere solcher, enthaltend Polycarbonat als einen oder einzigen Thermoplasten, geeignet sind. Diglycerolester führen im Gegensatz zu BDP nicht zu einer Herabsetzung der Wärmeformbeständigkeit.

Gegenstand der Erfindung sind daher thermoplastische Zusammensetzungen, enthaltend

(A) mindestens ein thermoplastisches Polymer,
(B) Bornitrid und
(C) mindestens ein Fließhilfsmittel, ausgewählt aus der Gruppe der Diglycerolester.

Die Erfindung wird weiterhin gelöst durch Formteile, insbesondere Komponenten einer elektrischen oder elektronischen Baugruppe, eines Motorenteils oder eines Wärmetauschers wie beispielsweise Lampenfassungen, Wärmesenken und Kühler bzw. Kühlkörper für Platinen, hergestellt aus einer solchen Zusammensetzung.

Die einzelnen Bestandteile der erfindungsgemäßen Zusammensetzungen sind im Folgenden noch näher erläutert:

## Komponente A

Als thermoplastisches Polymer werden amorphe und/oder semi-kristalline thermoplastische Polymere, alleine oder in Mischung, verwendet, welche ausgewählt sind aus der Gruppe der Polyamide, Polyester, Polyphenylensulfide, Polyphenylenoxide, Polysulfone, Poly(meth)acrylate, Polyimide, Polyetherimide, Polyetherketone sowie Polycarbonate. Bevorzugt werden erfindungsgemäß Polyamide oder Polycarbonate eingesetzt, ganz besonders bevorzugt Polycarbonate.

Die erfindungsgemäßen Zusammensetzungen enthalten bevorzugt 27,8 bis 90 Gew.-%, weiter bevorzugt 55,0 bis 90,0 Gew.-%, ganz besonders bevorzugt 70 bis 90 Gew.-% thermoplastisches Polymer.

In einer Ausführungsform der vorliegenden Erfindung werden als thermoplastisches Polymer amorphe und/oder semi-kristalline Polyamide verwendet. Geeignete Polyamide sind aliphatische Polyamide, zum Beispiel PA-6, PA-11, PA-12, PA-4,6, PA-4,8, PA-4,10, PA-4,12, PA-6,6, PA-6,9, PA-6,10, PA-6,12, PA-10,10, PA-12,12, PA-6/6,6-Copolyamid, PA-6/12-Copolyamid, PA-6/11-Copolyamid, PA-6,6/11-Copolyamid, PA-6,6/12-Copolyamid, PA-6/6,10-Copolyamid, PA-6,6/6,10-Copolyamid, PA-4,6/6-Copolyamid, PA-6/6,6/6,10-Terpolyamid, und Copolyamid aus 1,4-Cyclohexandicarbonsäure und 2,2,4- und 2,4,4-Trimethylhexamethylendiamin, aromatische Polyamide, zum Beispiel PA-6,1, PA-6,1/6,6-Copolyamid, PA-6,T, PA-6,T/6-Copolyamid, PA-6,T/6,6-Copolyamid, PA-6,1/6,T-Copolyamid, PA-6,6/6,T/6,1-Copolyamid, PA-6,T/2-MPMDT-Copolyamid (2-MPMDT = 2-Methylpentamethylendiamin), PA-9,T, Copolyamid aus Terephthalsäure, 2,2,4- und 2,4,4-Trimethylhexamethylendiamin, Copolyamid aus Isophthalsäure, Laurinlactam und 3,5-Dimethyl-4,4-diaminodicyclohexylmethan, Copolyamid aus Isophthalsäure, Azelainsäure und/oder Sebacinsäure und 4,4-Diaminodicyclohexylmethan, Copolyamid aus Caprolactam, Isophthalsäure und/oder Terephthalsäure und 4,4-Diaminodicyclohexylmethan, Copolyamid aus Caprolactam, Isophthalsäure und/oder Terephthalsäure und Isophorondiamin, Copolyamid aus Isophthalsäure und/oder Terephthalsäure und/oder weiteren aromatischen oder aliphatischen Dicarbonsäuren, optional alkylsubstituiertem Hexamethylendiamin und alkylsubstituiertem 4,4-Diaminodicyclohexylamin oder deren Copolyamide sowie Mischungen zuvor genannter Polyamide.

Bei Einsatz von Polyamiden werden als Komponente A bevorzugt semi-kristalline Polyamide verwendet, welche vorteilhafte thermische Eigenschaften aufweisen. Hierbei werden semi-kristalline Polyamide verwendet, welche einen Schmelzpunkt von mindestens 200 °C, bevorzugt von mindestens 220 °C, weiter bevorzugt von mindestens 240 °C und noch weiter bevorzugt von mindestens 260 °C aufweisen. Je höher der Schmelzpunkt der semi-kristallinen Polyamide, desto vorteilhafter ist das thermische Verhalten der erfindungsmäßen Zusammensetzungen. Der Schmelzpunkt wird mittels DSC ermittelt.

Bevorzugte semi-kristalline Polyamide sind ausgewählt aus der Gruppe, enthaltend PA-6, PA-6,6, PA-6,10, PA-4,6, PA-11, PA-12, PA-12,12, PA-6,1, PA-6,T, PA-6,T/6,6-Copolyamid, PA-6,T/6-Copolyamid, PA-6/6,6-Copolyamid, PA-6,6/6,T/6, 1-Copolyamid, PA-6,T/2-MPMDT-Copolyamid, PA-9,T, PA-4,6/6-Copolyamid und deren Mischungen oder Copolyamide.

Besonders bevorzugte semi-kristalline Polyamide sind PA-6,1, PA-6,T, PA-6,6, PA-6,6/6T, PA-6,6/6,T/6,1-Copolyamid, PA-6,T/2-MPMDT-Copolyamid, PA-9,T, PA-4,6 und deren Mischungen oder Copolyamide.

Bevorzugte erfindungsgemäße Zusammensetzungen enthalten als Komponente A das Polymer PA-4,6 oder eines seiner Copolyamide.

Besonders bevorzugte erfindungsgemäße Zusammensetzungen enthalten als thermoplastisches Polymer ausschließlich Polycarbonat.

Polycarbonate im Sinne der vorliegenden Erfindung sind sowohl Homopolycarbonate als auch Copolycarbonate und/oder Polyestercarbonate; die Polycarbonate können in bekannter Weise linear oder verzweigt sein. Erfindungsgemäß können auch Mischungen von Polycarbonaten verwendet werden.

Die thermoplastischen Polycarbonate einschließlich der thermoplastischen, aromatischen Polyestercarbonate haben mittlere Molekulargewichte $M_w$ (ermittelt durch Messung der relativen Viskosität bei 25°C in $CH_2Cl_2$ und einer Konzentration von 0,5 g pro 100 ml $CH_2Cl_2$) von 20.000 g/mol bis 32.000 g/mol, vorzugsweise von 23.000 g/mol bis 31.000 g/mol, inbesondere von 24.000 g/mol bis 31.000 g/mol.

Ein Teil, bis zu 80 Mol-%, vorzugsweise von 20 Mol-% bis zu 50 Mol-%, der Carbonat-Gruppen in den erfindungsgemäß eingesetzten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, werden als aromatische Polyestercarbonate bezeichnet. Sie werden im Rahmen der vorliegenden Erfindung unter dem Oberbegriff der thermoplastischen, aromatischen Polycarbonate subsumiert.

Die Herstellung der Polycarbonate erfolgt in bekannter Weise aus Diphenolen, Kohlensäurederivaten, gegebenenfalls Kettenabbrechern und gegebenenfalls Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten.

Für die Herstellung von Polycarbonaten geeignete Dihydroxyarylverbindungen sind solche der Formel (2)

HO-Z-OH (2),

in welcher

Z ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (2) für einen Rest der Formel (3)

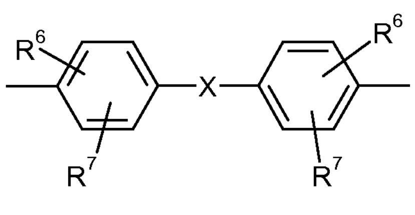

(3),

in der

$R^6$ und $R^7$ unabhängig voneinander für H, $C_1$-bis $C_{18}$-Alkyl-, $C_1$- bis $C_{18}$-Alkoxy, Halogen wie Cl oder Br oder für jeweils gegebenenfalls substituiertes Aryl- oder Aralkyl, bevorzugt für H oder $C_1$- bis $C_{12}$-Alkyl, besonders bevorzugt für H oder $C_1$- bis $C_8$-Alkyl und ganz besonders bevorzugt für H oder Methyl stehen, und

X für eine Einfachbindung, -$SO_2$-, -CO-, -O-, -S-, $C_1$- bis $C_6$-Alkylen, $C_2$- bis $C_5$-Alkyliden oder $C_5$- bis $C_6$-Cycloalkyliden, welches mit $C_1$- bis $C_6$-Alkyl, vorzugsweise Methyl oder Ethyl, substituiert sein kann, ferner für $C_6$- bis $C_{12}$-Arylen, welches gegebenenfalls mit weiteren Heteroatome enthaltenden aromatischen Ringen kondensiert sein kann, steht.

Bevorzugt steht X für eine Einfachbindung, $C_1$- bis $C_5$-Alkylen, $C_2$- bis $C_5$-Alkyliden, $C_5$- bis $C_6$-Cycloalkyliden, -O-, -SO-, -CO-, -S-, -$SO_2$-
oder für einen Rest der Formel (3a)

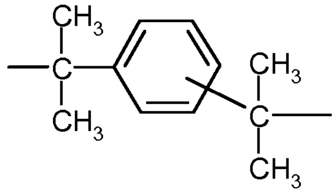

(3a).

Beispiele für Dihydroxyarylverbindungen (Diphenole) sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1 '-Bis-(hydroxyphenyl)-diisopropylbenzole sowie deren kernalkylierte und kernhalogenierte Verbindungen.

Für die Herstellung der erfindungsgemäß zu verwendenden Polycarbonate geeignete Diphenole sind beispielsweise Hydrochinon, Resorcin, Dihydroxydiphenyl, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha,\alpha'$-Bis-(hydroxyphenyl)-diisopropylbenzole sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenylpropan, 1,1-Bis-(4-hydroxyphenyl)-phenylethan, 2,2-Bis-(4-hydroxyphenyl)propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC).

Besonders bevorzugte Diphenole sind 4,4'-Dihydroxydiphenyl, 1,1-Bis-(4-hydroxyphenyl)-phenyl-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).

Diese und weitere geeignete Diphenole sind z.B. in US 2 999 835 A, 3 148 172 A, 2 991 273 A, 3 271 367 A, 4 982 014 A und 2 999 846 A, in den deutschen Offenlegungsschriften 1 570 703 A, 2 063 050 A, 2 036 052 A, 2 211 956 A und 3 832 396 A, der französischen Patentschrift 1 561 518 A1, in der Monographie "H. Schnell, Chemistry and Physics of Polycarbonates, Interscience Publishers, New York 1964, S. 28 ff.; S.102 ff.", und in "D.G. Legrand, J.T. Bendler, Handbook of Polycarbonate Science and Technology, Marcel Dekker New York 2000, S. 72ff." beschrieben.

Im Falle der Homopolycarbonate wird nur ein Diphenol eingesetzt, im Falle von Copolycarbonaten werden zwei oder mehr Diphenole eingesetzt. Die verwendeten Diphenole, wie auch alle anderen der Synthese zugesetzten Chemikalien und Hilfsstoffe, können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Die zur Regelung des Molekulargewichtes benötigten monofunktionellen Kettenabbrecher, wie Phenole oder Alkylphenole, insbesondere Phenol, p-tert.-Butylphenol, iso-Octylphenol, Cumylphenol, deren Chlorkohlensäureester oder Säurechloride von Monocarbonsäuren bzw. Gemische aus diesen Kettenabbrechern, werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind, bzw. im Falle der Säurechloride und Chlorkohlensäureester als Kettenabbrecher, solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wenn kein Phosgen mehr vorliegt, aber der Katalysator noch nicht dosiert wurde, bzw. sie werden vor dem Katalysator, mit dem Katalysator zusammen oder parallel

zudosiert.

In der gleichen Weise werden eventuell zu verwendende Verzweiger oder Verzweigermischungen der Synthese zugesetzt, üblicherweise jedoch vor den Kettenabbrechern. Üblicherweise werden Trisphenole, Quarterphenole oder Säurechloride von Tri- oder Tetracarbonsäuren verwendet oder auch Gemische der Polyphenole oder der Säurechloride.

Einige der als Verzweiger verwendbaren Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tris-(4-hydroxyphenyl)-benzol, 1,1,1-Tri-(4-hydroxyphenyl)-ethan, Tris-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, Tetra-(4-hydroxyphenyl)-methan.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die Menge der gegebenenfalls einzusetzenden Verzweiger beträgt 0,05 Mol-% bis 2 Mol-%, bezogen wiederum auf Mole an jeweils eingesetzten Diphenolen.

Die Verzweiger können entweder mit den Diphenolen und den Kettenabbrechern in der wässrigen alkalischen Phase vorgelegt werden oder in einem organischen Lösungsmittel gelöst vor der Phosgenierung zugegeben werden.

Alle diese Maßnahmen zur Herstellung der Polycarbonate sind dem Fachmann geläufig.

Für die Herstellung der Polyestercarbonate geeignete aromatische Dicarbonsäuren sind beispielsweise Orthophthalsäure, Terephthalsäure, Isophthalsäure, tert-Butylisophthalsäure, 3,3'-Diphenyldicarbonsäure, 4,4'-Diphenyldicarbonsäure, 4,4-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Derivate der Dicarbonsäuren sind die Dicarbonsäuredihalogenide und die Dicarbonsäuredialkylester, insbesondere die Dicarbonsäuredichloride und die Dicarbonsäuredimethylester.

Der Ersatz der Carbonatgruppen durch die aromatischen Dicarbonsäureestergruppen erfolgt im Wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Bevorzugte Herstellungsweisen der erfindungsgemäß zu verwendenden Polycarbonate, einschließlich der Polyestercarbonate, sind das bekannte Grenzflächenverfahren und das bekannte Schmelzeumesterungsverfahren (vgl. z. B. WO 2004/063249 A1, WO 2001/05866 A1, WO 2000/105867, US 5,340,905 A, US 5,097,002 A, US-A 5,717,057 A).

Im ersten Fall dienen als Säurederivate vorzugsweise Phosgen und gegebenenfalls Dicarbonsäuredichloride, im letzteren Fall vorzugsweise Diphenylcarbonat und gegebenenfalls Dicarbonsäurediester. Katalysatoren, Lösungsmittel, Aufarbeitung, Reaktionsbedingungen etc. für die Polycarbonatherstellung bzw. Polyestercarbonatherstellung sind in beiden Fällen hinreichend beschrieben und bekannt.

Sofern das thermoplastische Polymer gemäß Komponente A ein Polycarbonat ist, sind bevorzugt 28 bis 89,8 Gew.-% Polycarbonat, besonders bevorzugt 54,7 bis 89,8 Gew.-%, bezogen auf die Gesamtzusammensetzung, enthalten.

**Komponente B**

Als Komponente B wird erfindungsgemäß Bornitrid eingesetzt.

In den erfindungsgemäßen Zusammensetzungen kann das verwendete Bornitrid ein kubisches Bornitrid, ein hexagonales Bornitrid, ein amorphes Bornitrid, ein partiell kristallines Bornitrid, ein turbostratisches Bornitrid, ein wurtzitisches, ein rhomboedrisches Bornitrid und/oder eine weitere allotrope Form sein, wobei die hexagonale Form bevorzugt ist.

Die Herstellung von Bornitrid ist beispielsweise in den Schriften US 6,652,822 B2, US 2001/0021740 A1, US 5,898,009 A, US 6,048,511 A, US 2005/0041373 A1, US 2004/0208812 A1, US 6,951,583 B2 sowie in WO 2008/042446 A2 beschrieben.

Das Bornitrid wird in Form von Plättchen, Pulvern, Nanopulvern, Fasern sowie Agglomeraten oder einer Mischung zuvor genannter Formen verwendet.

Bevorzugt wird eine Mischung aus diskretem plättchenförmigen Bornitrid und Agglomeraten genutzt.

Ebenfalls bevorzugt werden Bornitride mit einer agglomerierten Partikelgröße (D(0,5)-Wert) von 1 μm bis 100 μm, bevorzugt von 3 μm bis 60 μm, besonders bevorzugt von 5 μm bis 30 μm, ermittelt durch Laserbeugung, genutzt. Bei der Laserbeugung werden Partikelgrößenverteilungen durch Messung der Winkelabhängigkeit der Intensität von gestreutem Licht eines Laserstrahls, der eine dispergierte Partikelprobe durchdringt, ermittelt. Hierbei wird die Mie-Theorie der Lichtstreuung zur Berechnung der Partikelgrößenverteilung verwendet. Der D(0,5)-Wert bedeutet, dass 50 Vol.-% aller vorkommenden Partikel in dem untersuchten Material kleiner sind als der angegebene Wert.

In einer weiteren Ausführungsform der vorliegenden Erfindung werden Bornitride mit einem D(0,5) -Wert von 0,1 µm bis 50 µm, bevorzugt von 1 µm bis 30 µm, besonders bevorzugt von 3 µm bis 20 µm genutzt.

Bornitride werden mit unterschiedlichen Partikelgrößenverteilungen in den erfindungsmäßen Zusammensetzungen eingesetzt. Die Partikelgrößenverteilung wird hierbei als Quotient aus D(0,1)-Wert und D(0,9)-Wert beschrieben.

Verwendung finden Bornitride mit einem D(0,1)/D(0,9) - Verhältnis von 0,0001 bis 0,4, bevorzugt von 0,001 bis 0,2. Besonders bevorzugt werden Bornitride mit einem D(0,1)/D(0,9) - Verhältnis von 0,01 bis 0,15 eingesetzt, was einer sehr engen Verteilung entspricht.

In einer weiteren Ausführungsform der vorliegenden Erfindung werden zwei Bornitride mit unterschiedlicher Partikelgrößenverteilung genutzt, wodurch eine bimodale Verteilung in der Zusammensetzung entsteht.

Bei der Verwendung von hexagonalem Bornitrid werden Plättchen mit einem Aspekt-Verhältnis (mittlerer Plättchendurchmesser dividiert durch Plättchendicke) von ≥ 2, bevorzugt ≥ 5, besonders bevorzugt ≥ 10 genutzt.

Der Kohlenstoffgehalt der verwendeten Bornitride beträgt ≤ 1 Gew.-%, bevorzugt ≤ 0,5 Gew.-%, besonders bevorzugt ≤ 0,1 Gew.-% und ganz besonders bevorzugt ≤ 0,05 Gew.-%.

Der Sauerstoffgehalt der verwendeten Bornitride beträgt ≤ 1 Gew.-%, bevorzugt ≤ 0,5 Gew.-% und besonders bevorzugt ≤ 0,4 Gew.-%.

Der Anteil an löslichen Boraten in den verwendeten Bornitriden liegt zwischen 0,01 Gew.-% und 1,00 Gew.-%, bevorzugt zwischen 0,05 Gew.-% und 0,50 Gew.-% und besonders bevorzugt zwischen 0,10 % und 0,30 Gew.-%.

Die Reinheit der Bornitride, das heißt der Anteil an reinem Bornitrid in dem jeweils genutzten Zuschlagstoff, beträgt mindestens 90 Gew.-%, bevorzugt mindestens 95 Gew.-% und weiterhin bevorzugt mindestens 98 Gew.-%.

Die erfindungsgemäß verwendeten Bornitride weisen eine Oberfläche, ermittelt nach dem BET (S. Brunauer, P. H. Emmett, E. Teller) - Bestimmungsverfahren nach DIN-ISO 9277 (Version DIN-ISO 9277:2014-01), von 0,1 $m^2/g$ bis 25 $m^2/g$, bevorzugt 1,0 $m^2/g$ bis 10 $m^2/g$ und besonders bevorzugt 3 $m^2/g$ bis 9 $m^2/g$ auf.

Die Schüttdichte der Bornitride beträgt vorzugsweise ≤ 1 $g/cm^3$, besonders bevorzugt ≤ 0,8 $g/cm^3$ und ganz besonders bevorzugt ≤ 0,6 $g/cm^3$.

Es werden bevorzugt 1 Gew.-% bis 60 Gew.-%, bevorzugt 5 Gew.-% bis 40 Gew.-%, besonders bevorzugt 8 Gew.-% bis 35 Gew.-%, ganz besonders bevorzugt 10 bis 30 Gew.-% an Bornitrid, besonders bevorzugt ohne jegliche weitere Füllstoffe, in den Zusammensetzungen verwendet.

Beispiele für kommerziell verwendbare Bornitride sind Bornitrid Cooling Filler TP 15/400 von der Firma ESK Ceramics GmbH & Co. KG, HeBoFill® 511, HeBoFill® 501, HeBoFill® 483, HeBoFill® 482 von der Firma Henze Boron Nitride Products AG und CoolFlow CF400, CoolFlow CF500, CoolFlow CF600 sowie PolarTherm PT110 von der Firma Momentive Performance Materials.

Weiterhin können die Bornitride an der Oberfläche modifiziert sein, wodurch die Verträglichkeit der Füllstoffe mit der erfindungsmäßen Zusammensetzung erhöht wird. Geeignete Modifikatoren sind unter anderen organische, beispielsweise Silicium-organische Verbindungen.

**Komponente C**

Die verwendeten Fließhilfsmittel C sind Ester von Carbonsäuren mit Diglycerol. Dabei sind Ester auf Basis verschiedener Carbonsäuren geeignet. Auch können unterschiedliche Isomere von Diglycerol Basis für die Ester bilden. Neben Monoestern können auch Mehrfachester von Diglycerol eingesetzt werden. Anstelle von Reinverbindungen können auch Gemische verwendet werden.

Isomere von Diglycerol, welche die Basis für die erfindungsgemäß eingesetzten Diglycerolester bilden, sind die folgenden:

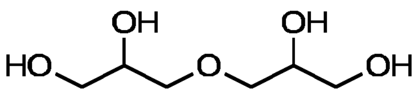

α,α-Diglycerol

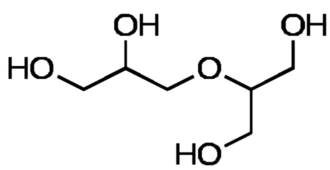

α,β-Diglycerol

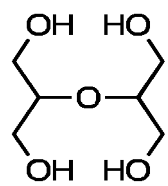

β,β-Diglycerol

Für die erfindungsgemäß verwendeten Diglycerolester können solche Isomere dieser Formeln eingesetzt werden, die einfach oder mehrfach verestert sind. Als Fließhilfsmittel einsetzbare Gemische bestehen aus den Diglyceroledukten sowie daraus abgeleiteten Esterendprodukten, beispielweise mit den Molekulargewichten 348 g/mol (Monolaurylester) oder 530 g/mol (Dilaurylester).

Die erfindungsgemäß in der Zusammensetzung enthaltenen Diglycerolester leiten sich vorzugsweise von gesättigten oder ungesättigten Monocarbonsäuren mit einer Kettenlänge von 6 bis 30 C-Atomen ab. Geeignete Monocarbonsäuren sind beispielsweise Caprylsäure ($C_7H_{15}COOH$, Octansäure), Caprinsäure ($C_9H_{19}COOH$, Decansäure), Laurinsäure ($C_{11}H_{23}COOH$, Dodecansäure), Myristinsäure ($C_{13}H_{27}COOH$, Tetradecansäure), Palmitinsäure ($C_{15}H_{31}COOH$, Hexadecansäure), Margarinsäure ($C_{16}H_{33}COOH$, Heptadecansäure), Stearinsäure ($C_{17}H_{35}COOH$, Octadecansäure), Arachinsäure ($C_{19}H_{39}COOH$, Eicosansäure), Behensäure ($C_{21}H_{43}COOH$, Docosansäure), Lignocerinsäure ($C_{23}H_{47}COOH$, Tetracosansäure), Palmitoleinsäure ($C_{15}H_{29}COOH$, (9Z)-Hexadeca-9-ensäure), Petroselinsäure ($C_{17}H_{33}COOH$, (6Z)-Octadeca-6-ensäure), Elaidinsäure ($C_{17}H_{33}COOH$, (9E)-Octadeca-9-ensäure), Linolsäure ($C_{17}H_{31}COOH$, (9Z,12Z)-Octadeca-9,12-diensäure), alpha- oder gamma-Linolensäure ($C_{17}H_{29}COOH$, (9Z,12Z,15Z)-Octadeca-9,12,15-triensäure und (6Z,9Z,12Z)-Octadeca-6,9,12-triensäure), Arachidonsäure ($C_{19}H_{31}COOH$, (5Z,8Z,11Z,14Z)-Eicosa-5,8,11,14-tetraensäure), Timnodonsäure ($C_{19}H_{29}COOH$, (5Z,8Z,11Z,14Z,17Z)-Eicosa-5,8,11,14,17-pentaensäure) und Cervonsäure ($C_{21}H_{31}$ COOH, (4Z,7Z,10Z,13Z,16Z,19Z)-Docosa-4,7,10,13,16,19-hexaensäure). Besonders bevorzugt sind Laurinsäure, Palmitinsäure und/oder Stearinsäure.

Als Diglycerolester ist besonders bevorzugt mindestens ein Ester der Formel (I)

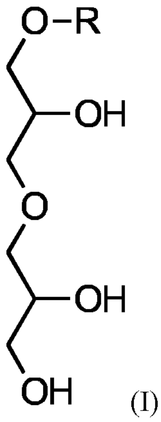

(I)

mit R = $COC_nH_{2n+1}$ und/oder R = COR',
wobei n eine ganze Zahl ist und wobei R' ein verzweigter Alkylrest oder ein verzweigter oder unverzweigter Alkenylrest ist und $C_nH_{2n+1}$ ein aliphatischer, gesättigter linearer Alkylrest ist,
enthalten.

Dabei ist n bevorzugt eine ganze Zahl von 6-24, so dass $C_nH_{2n+1}$ beispielsweise n-Hexyl, n-Heptyl, n-Octyl, n-Nonyl, n-Decyl, n-Dodecyl, n-Tridecyl, n-Tetradecyl, n-Hexadecyl oder n-Octadecyl ist. Weiter bevorzugt ist n = 8 bis 18, besonders bevorzugt 10 bis 16, ganz besonders bevorzugt 12 (Diglycerolmonolaurat-Isomer mit dem Molekulargewicht 348 g/mol, welches als Hauptprodukt in einem Gemisch besonders bevorzugt ist). Die vorgenannten Estergruppierungen liegen erfindungsgemäß bevorzugt auch bei den anderen Isomeren des Diglycerols vor.

Es kann sich demzufolge auch um ein Gemisch verschiedener Diglycerolester handeln.

Bevorzugt eingesetzte Diglycerolester weisen einen HLB-Wert von mindestens 6, besonders bevorzugt 6 bis 12 auf, wobei unter dem HLB-Wert die sog. "hydrophilic-lipophilic balance" verstanden wird, die gemäß der Methode nach Griffin wie folgt berechnet wird:

$$HLB = 20 \times (1 - M_{lipophil}/M),$$

wobei $M_{lipophil}$ die Molmasse des lipophilen Anteils des Diglycerolesters ist und M die Molmasse des Diglycerolesters.

Die Menge an Diglycerolester beträgt 0,01 bis 3,0 Gew.-%, bevorzugt 0,15 bis 1,50 Gew.-%, weiter bevorzugt 0,20 bis 1,0 Gew.-%, besonders bevorzugt 0,2 bis 0,5 Gew.-%.

**Komponente D**

Optional werden als Komponente D bis zu 30 Gew.-% anorganische Füllstoffe eingesetzt, welche bevorzugt aus der Gruppe der Metalloxide, Metallcarbide, Metallnitride oder Metallboride, Graphit oder Kombinationen dieser ausgewählt sind, beispielsweise Aluminiumoxid, Titandioxid, Magnesiumoxid, Berylliumoxid, Yttriumoxid, Hafniumoxid, Ceroxid, Zinkoxid, Siliciumcarbid, Titancarbid, Borcarbid, Zirkoniumcarbid, Aluminiumcarbid, Siliciumcarbid, Titanwolframcarbid, Tantalcarbid, Aluminiumnitrid, Magnesiumsiliciumnitrid, Titannitrid, Siliciumdioxid, Siliciumnitrid, Zirconiumborid, Titandiborid, Bariumsulfat, Glasfüllstoff und/oder Aluminiumborid.

Als Komponente D werden besonders bevorzugt anorganische Füllstoffe, ausgewählt aus der Gruppe Quarz, Graphit und/oder Glasfüllstoff, eingesetzt. Ganz besonders bevorzugt wird Graphit eingesetzt.

Erfindungsgemäß bevorzugte Füllstoffe auf Quarzbasis sind insbesondere solche Mineralien, die zu über 97 Gew.-% auf der Basis von Quarz ($SiO_2$) aufgebaut sind. Die Korngestalt ist dabei sphärisch und/oder annähernd sphärisch.

Bevorzugt handelt es sich bei Komponente D um feinteilige Quarzmehle, die durch eisenfreie Mahlung mit nachfolgender Windsichtung aus aufbereitetem Quarzsand hergestellt wurden. Alternativ bevorzugt ist Quarzgut, das durch eisenfreie Klassierung aus amorphem Siliciumdioxid hergestellt wird.

Die in den erfindungsgemäßen Zusammensetzungen verwendeten Quarze sind durch einen mittleren Durchmesser (D(0,5)-Wert) von 2 bis 10 μm, vorzugsweise von 2,5 bis 8,0 μm, weiter bevorzugt von 3 bis 5 μm, und besonders bevorzugt von 3 bis 4 μm gekennzeichnet, wobei ein oberer Durchmesser (D(0,95)-Wert) von entsprechend 6 bis 34 μm, weiter bevorzugt von 6,5 bis 25,0 μm, noch weiter bevorzugt von 7 bis 15 μm, und besonders bevorzugt von 8 bis 12 μm bevorzugt ist. Die Korngrößenverteilung (mittlere Durchmesser) wird durch Windsichten bestimmt.

Bevorzugt weisen die Quarze eine spezifische BET-Oberfläche, bestimmt durch Stickstoffadsorption gemäß ISO 9277, von 0,4 bis 8,0 $m^2/g$, weiter bevorzugt von 2,0 bis 7,0 $m^2/g$, und besonders bevorzugt von 4,4 bis 6,0 $m^2/g$ auf.

Weiter bevorzugte Quarze weisen nur maximal 3 Gew.-% Nebenbestandteile auf, wobei vorzugsweise der Gehalt an
$Al_2O_3$ < 2,0 Gew.-%,
$Fe_2O_3$ < 0,05 Gew.-%,
(CaO + MgO) < 0,1 Gew.-%,
($Na_2O$ + $K_2O$) < 0,1 Gew.-%) ist, jeweils bezogen auf das Gesamtgewicht des Silikats.

Bevorzugt werden Quarze mit einem pH-Wert von 5,5 bis 9,0, weiter bevorzugt 6,0 bis 8,0, gemessen gemäß ISO 10390 in wässriger Suspension, eingesetzt.

Sie weisen darüber hinaus eine Ölabsorptionszahl gemäß ISO 787-5 von bevorzugt 20 bis 30 g/100 g auf.

In einer bevorzugten Ausführungsform kommen anorganische Füllstoffe, insbesondere Quarze, zum Einsatz, die eine Beschichtung mit Silicium-organischen Verbindungen haben, wobei bevorzugt Epoxysilan-, Methylsiloxan- und/oder Methacrylsilan-Schlichten zum Einsatz kommen. Besonders bevorzugt ist eine Epoxysilanschlichte.

Die Beschlichtung von anorganischen Füllstoffen erfolgt nach den allgemeinen, dem Fachmann bekannten Verfahren.

Beispiele für kommerziell verwendbare Quarzmehle sind Sikron SF300, Sikron SF600, Sikron SF800, Silbond SF600 EST oder Amosil FW300 und Amosil FW600 der Firma Quarzwerke GmbH (50226 Frechen, Deutschland) oder Mikro-Dorsilit® 120 der Firma QUARZSANDE GmbH (4070 Eferding, Österreich).

Erfindungsgemäß verwendbare anorganische Füllstoffe sind außerdem Gläser, bestehend aus einer Glaszusammensetzung, ausgewählt aus der Gruppe der M-, E-, A-, S-, R-, AR-, ECR-, D-, Q- oder C-Gläser, wobei E-, S- oder C-Glas weiter bevorzugt sind.

Die Glaszusammensetzung kann in Form von Glasmassivkugeln, Glashohlkugeln, Glasperlen, Glasflakes, Glasbruch sowie Glasfasern eingesetzt werden, wobei die Glasfasern weiter bevorzugt sind.

Die Glasfasern können in Form von Endlosfasern (rowings), Schnittglasfasern, gemahlenen Glasfasern, Glasfasergeweben oder Mischungen der vorgenannten Formen eingesetzt werden, wobei die Schnittglasfasern sowie die Mahlfasern bevorzugt eingesetzt werden.

Besonders bevorzugt werden gemahlene Glasfasern eingesetzt.

Die bevorzugte Faserlänge der Schnittglasfasern beträgt vor der Compoundierung 0,5 bis 10 mm, weiter bevorzugt 1,0 bis 8 mm, ganz besonders bevorzugt 1,5 bis 6 mm.

Schnittglasfasern können mit unterschiedlichen Querschnitten eingesetzt werden. Bevorzugt werden runde, elliptische, ovale, 8-förmige und flache Querschnitte eingesetzt, wobei die runden, ovalen sowie flachen Querschnitte besonders bevorzugt sind.

Der Durchmesser von Rundfasern beträgt bevorzugt 5 bis 25 μm, weiter bevorzugt 6 bis 20 μm, besonders bevorzugt 7 bis 17 μm.

Bevorzugte Flach- und Ovalglasfasern weisen ein Querschnittverhältnis aus Höhe zu Breite von ca. 1,0:1,2 bis 1,0:8,0, bevorzugt 1,0:1,5 bis 1,0:6,0, besonders bevorzugt 1,0:2,0 bis 1,0:4,0 auf.

Die Flach- und Ovalglasfasern weisen weiterhin eine durchschnittliche Faserhöhe von 4 μm bis 17 μm, bevorzugt von 6 μm bis 12 μm und besonders bevorzugt 6 μm bis 8 μm sowie eine durchschnittliche Faserbreite von 12 μm bis 30 μm, bevorzugt 14 μm bis 28 μm und besonders bevorzugt 16 μm bis 26 μm auf.

Die Glasfasern sind bei einer Alternative mit einer Glasschlichte an der Oberfläche der Glasfaser modifiziert. Bevorzugte Glasschlichten sind Epoxy-modifizierte, Polyurethan-modifizierte und nichtmodifizierte Silanverbindungen sowie Mischungen der vorgenannten Silanverbindungen.

Bei einer anderen Alternative sind die Glasfasern nicht mit einer Glasschlichte modifiziert.

Die verwendeten Glasfasern zeichnen sich dadurch aus, dass die Auswahl der Faser nicht durch die Wechselwirkungscharakteristik der Faser mit der Polycarbonatmatrix beschränkt ist.

Eine starke Anbindung der Glasfaser an die Polymermatrix ist an den Tieftemperaturbruchoberflächen bei rasterelektronenmikroskopischen Aufnahmen zu erkennen, wobei die größte Anzahl der gebrochenen Glasfasern auf derselben Höhe wie die Matrix gebrochen sind und nur vereinzelt Glasfasern aus der Matrix herausstehen. Rasterelektronenmikroskopische Aufnahmen zeigen für den umgekehrten Fall der nicht-anbindenden Charakteristik, dass die Glasfasern im Tieftemperaturbruch aus der Matrix stark herausstehen oder vollständig herausgeglitten sind.

In der erfindungsgemäßen Zusammensetzung werden gemahlene Glasfasern in Gehalten von bevorzugt 5,0 - 50,0 Gew.-%, besonders bevorzugt von 10,0 - 30,0 Gew.-% und ganz besonders bevorzugt 15,0 - 25,0 Gew.-% verwendet.

In einer weiteren bevorzugten Ausführungsform werden Mischungen der zuvor genannten Glaszusammensetzungen eingesetzt, wobei keine Limitierung in Form und Querschnitt besteht.

Eine weitere Gruppe für die in erfindungsgemäßen Zusammensetzungen einsetzbaren Füllstoffe sind Graphite.

Besonders bevorzugt werden expandierte Graphite, alleine oder in Mischung mit weiteren anorganischen Füllstoffen, verwendet. Bei den expandierten Graphiten sind die einzelnen Basalebenen des Graphits durch eine spezielle Behandlung auseinandergetrieben, wodurch eine Volumenvergrößerung des Graphits, bevorzugt um den Faktor 200 bis 400, resultiert. Die Herstellung von expandierten Graphiten ist unter anderem in den Schriften US 1,137,373 A, US 1,191,383 A sowie US 3,404,061 A beschrieben.

Graphite werden in Form von Fasern, Stäbchen, Kugeln, Hohlkugeln, Plättchen, in Pulverform, jeweils sowohl in aggregierter als auch in agglomerierter Form, bevorzugt in Plättchenform, in den Zusammensetzungen verwendet.

Unter der plättchenförmigen Struktur wird in der vorliegenden Erfindung ein Partikel verstanden, der eine flache Geometrie aufweist. So ist die Höhe der Partikel üblicherweise deutlich geringer im Vergleich zu der Breite oder Länge der Partikel. Derartige flache Partikel können wiederum zu Gebilden agglomeriert oder aggregiert sein.

Die Höhe der plättchenförmigen Primärpartikel beträgt weniger als 500 nm, bevorzugt weniger als 200 nm und besonders bevorzugt weniger als 100 nm. Durch die kleinen Größen dieser Primärpartikel kann die Form der Partikel gebogen, gekrümmt, gewellt oder andersartig deformiert sein.

Die Längendimensionen der Partikel können durch Standardmethoden, zum Beispiel die Elektronenmikroskopie, ermittelt werden.

Graphit wird in den erfindungsmäßen thermoplastischen Zusammensetzungen in Mengen von 1,0 bis 20,0 Gew.-%, bevorzugt 3,0 bis 15,0 Gew.-%, weiter bevorzugt 5,0 bis 12,0 Gew.-%, besonders bevorzugt 5,0 bis 7,5 Gew.-% eingesetzt. Bevorzugt wird die Zugabemenge des Graphites in den erfindungsmäßen Zusammensetzungen derart gewählt, dass die Zusammensetzungen elektrische Isolation als Kerneigenschaft zeigen. Unter elektrischer Isolation wird im nachfolgenden ein spezifischer Durchgangswiderstand > 1E+10 [Ohm·m], besonders bevorzugt > 1E+12 [Ohm·m] und ganz besonders bevorzugt > 1E+13 [Ohm·m], definiert.

Erfindungsgemäß bevorzugt wird ein Graphit mit einer relativ hohen spezifischen Oberfläche, ermittelt als BET-Oberfläche mittels Stickstoffadsorption nach ASTM D3037, verwendet. Bevorzugt werden Graphite mit einer BET-Oberfläche von ≥ 5 $m^2/g$, besonders bevorzugt ≥ 10 $m^2/g$ und ganz besonders bevorzugt ≥ 18 $m^2/g$ in den thermoplastischen Zusammensetzungen eingesetzt.

Sofern als Füllstoff expandierter Graphit enthalten ist, ist der D(0,5) des Graphits, bestimmt durch Siebanalyse gemäß DIN 51938 (DIN 51938:1994-07), < 1,2 mm.

Bevorzugt haben die Graphite eine Partikelgrößenverteilung, welche durch den D(0,9) charakterisiert wird, von mindestens 1 mm, bevorzugt von mindestens 1,2 mm, weiter bevorzugt von mindestens 1,4 mm und noch weiter bevorzugt von mindestens 1,5 mm.

Ebenfalls bevorzugt haben die Graphite eine Partikelgrößenverteilung, welche durch den D(0,5) charakterisiert wird, von mindestens 400 μm, bevorzugt von mindestens 600 μm, weiter bevorzugt von mindestens 750 μm und noch weiter bevorzugt von mindestens 850 μm.

Bevorzugt weisen die Graphite eine Partikelgrößenverteilung, welche durch den D(0,1) charakterisiert wird, von mindestens 100 μm, bevorzugt von mindestens 150 μm, weiter bevorzugt von mindestens 200 μm und noch weiter bevorzugt von mindestens 250 μm auf.

Besonders bevorzugt sind solche Graphite, bei denen die genannten Bereiche für den D(0,1), D(0,5) und D(0,9) kombiniert sind.

Die Kennzahlen D(0,1), D(0,5) und D(0,9) werden durch Siebanalyse in Anlehnung an DIN 51938 (DIN 51938:1994-07) ermittelt.

Die verwendeten Graphite haben eine Dichte, ermittelt mit Xylol, im Bereich von 2,0 $g/cm^3$ bis 2,4 $g/cm^3$, bevorzugt von 2,1 $g/cm^3$ bis 2,3 $g/cm^3$ sowie weiter bevorzugt von 2,2 $g/cm^3$ bis 2,27 $g/cm^3$.

Der Kohlenstoffgehalt der erfindungsgemäß verwendeten Graphite, ermittelt nach DIN 51903 (DIN 51903:2012-11) bei 800 °C für 20 Stunden, beträgt vorzugsweise ≥ 90 Gew.-%, weiter bevorzugt ≥ 95 Gew.-% und noch weiter bevorzugt > 98 Gew.-%.

Der Restfeuchtigkeitsgehalt der erfindungsgemäß verwendeten Graphite, ermittelt nach DIN 51904 (DIN 51904:2012-11) bei 110 °C für 8 Stunden, beträgt vorzugsweise ≤ 5 Gew.-%, weiter bevorzugt ≤ 3 Gew.-% und noch weiter bevorzugt ≤ 2 Gew.-%.

Die thermische Leitfähigkeit der erfindungsgemäß verwendeten Graphite beträgt vor der Verarbeitung parallel zu den Basalebenen zwischen 250 und 400 W/(m·K) sowie senkrecht zu den Basalebenen zwischen 6 bis 8 W/(m·K).

Der elektrische Widerstand der erfindungsgemäß verwendeten Graphite beträgt vor der Verarbeitung bevorzugt parallel zu den Basalebenen ca. 0,001 Ohm·cm und ist senkrecht zu den Basalebenen kleiner 0,1 Ohm·cm.

Die Schüttdichte der Graphite, ermittelt nach DIN 51705 (DIN 51705:2001-06), beträgt üblicherweise zwischen 50 g/l und 250 g/l, bevorzugt zwischen 65 g/l und 220 g/l und weiter bevorzugt zwischen 100 g/l und 200 g/l.

Bevorzugt werden Graphite in den thermoplastischen Zusammensetzungen eingesetzt, welche einen Schwefelgehalt kleiner 200 ppm aufweisen.

Bevorzugt werden außerdem Graphite in den thermoplastischen Zusammensetzungen eingesetzt, welche einen auslaugfähigen Chlorionengehalt kleiner 100 ppm aufweisen.

Ebenfalls bevorzugt werden Graphite in den thermoplastischen Zusammensetzungen eingesetzt, welche einen Gehalt an Nitraten und Nitriten kleiner 50 ppm aufweisen.

Besonders bevorzugt werden Graphite eingesetzt, welche alle diese Grenzwerte, d.h. für den Schwefel-, den Chlorionen-, den Nitrat- und den Nitritgehalt, aufweisen.

Kommerziell verfügbare, in den erfindungsgemäßen Zusammensetzungen verwendbare Graphite sind unter anderem Ecophit® GFG 5, Ecophit® GFG 50, Ecophit® GFG 200, Ecophit® GFG 350, Ecophit® GFG 500, Ecophit® GFG 900, Ecophit® GFG 1200 von der Firma SGL Carbon GmbH, TIMREX® BNB90, TIMREX® KS5-44, TIMREX® KS6, TIMREX® KS150, TIMREX® SFG44, TIMREX® SFG150, TIMREX® C-THERM™ 001 und TIMREX® C-THERM™ 011 von der Firma TIMCAL Ltd., SC 20 O, SC 4000 O/SM und SC 8000 O/SM von der Graphit Kropfmühl AG, Mechano-Cond 1, Mechano-Lube 2 und Mechano-Lube 4G von der Firma H.C. Carbon GmbH, Nord-Min 251 und Nord-Min 560T von der Firma Nordmann Rassmann GmbH und ASBURY A99, Asbury 230U und Asbury 3806 von der Firma Asbury Carbons.

**Weitere Komponenten**

Zusätzlich sind optional bis zu 10,0 Gew.-%, bevorzugt 0,10 bis 8,0 Gew.-%, besonders bevorzugt 0,2 bis 3,0 Gew.-% sonstige übliche Additive ("weitere Additive") enthalten. Diese Gruppe umfasst Flammschutzmittel, Antitropfmittel, Thermostabilisatoren, Entformungsmittel, Antioxidantien, UV-Absorber, IR-Absorber, Antistatika, optische Aufheller, Lichtstreumittel, Farbmittel wie Pigmente, auch anorganischen Pigmente, Ruß und/oder Farbstoffe, in den für Polycarbonat üblichen Mengen. Diese Additive können einzeln oder auch im Gemisch zugesetzt werden. Die Gruppe der weiteren Additive umfasst keine Glasfüllstoffe, Quarze, Graphite, Bornitrid sowie sonstigen anorganischen Füllstoffe, da diese bereits von den Komponenten B und D erfasst sind. "Weitere Additive" sind auch keine Fließhilfsmittel aus der Gruppe der Diglycerolester, da diese bereits als Komponente C erfasst sind.

Solche Additive, wie sie üblicherweise bei Polycarbonaten zugesetzt werden, sind beispielsweise in EP-A 0 839 623, WO-A 96/15102, EP-A 0 500 496 oder "Plastics Additives Handbook", Hans Zweifel, 5th Edition 2000, Hanser Verlag, München beschrieben.

Bevorzugt ist die Zusammensetzung frei von zusätzlichen Entformungsmitteln, da der Diglycerolester selbst als Entformungsmittel wirkt.

Die thermische Leitfähigkeit der Bornitrid enthaltenden Zusammensetzungen beträgt üblicherweise ≥ 0,5 W/(m·K), bevorzugt ≥ 2 W/(m·K), besonders bevorzugt ≥ 3 W/(m·K).

Eine bevorzugte erfindungsgemäße thermoplastische Zusammensetzung enthält

(A) 27,8 bis 90 Gew.-% thermoplastisches Polymer, weiter bevorzugt 54,7 bis 89,8 Gew.-% Polycarbonat,

(B) 1 bis 60 Gew.-%, weiter bevorzugt 10,0 bis 30,0 Gew.-% Bornitrid,

(C) 0,01 bis 3,0 Gew.-% Diglycerolester, weiter bevorzugt 0,1 bis 0,5 Gew.-% Diglycerolester und

(D) 0 bis 30 Gew.-%, bevorzugt 0 bis 20 Gew.-%, weiter bevorzugt 5 bis 16 Gew.-% mindestens einen weiteren anorganischen Füllstoff, ausgewählt aus der Gruppe Quarz, Graphit und/oder Glasfüllstoff.

Erfindungsgemäß besonders bevorzugt ist eine Zusammensetzung, die zusätzlich zu diesen Komponenten 0 bis 10 Gew.-% weitere Additive, sonst aber keine weiteren Komponenten, enthält.

Eine weitere bevorzugte erfindungsgemäße Zusammensetzung enthält

(A) 50 bis 79,6 Gew.-% thermoplastisches Polymer, weiter bevorzugt Polycarbonat,
(B) 10,0 bis 30,0 Gew.-% Bornitrid,
(C) 0,01 bis 3,0 Gew.-% Diglycerolester, weiter bevorzugt 0,1 bis 0,5 Gew.-% Diglycerolester und
(D) 10 bis 20 Gew.-% mindestens eines weiteren anorganischen Füllstoffs, ausgewählt aus der Gruppe Quarz, Graphit und/oder Glasfüllstoff,
(E1) 0,1 bis 0,5 Gew.-% Pentaerythritoltetrastearat,
(E2) 0,1 bis 0,3 Gew.-% Kalium-nonafluor-1-butansulfonat und
(E3) 0,1 bis 0,5 Gew.-% Polytetrafluorethylen.

Bevorzugt enthält diese Zusammensetzung keine weiteren Komponenten.

Besonders bevorzugte erfindungsgemäße Zusammensetzungen bestehen aus

(A) 50 bis 79,6 Gew.-% thermoplastischem Polymer, weiter bevorzugt Polycarbonat,
(B) 10,0 bis 30,0 Gew.-% Bornitrid,
(C) 0,01 bis 3,0 Gew.-% Diglycerolester, weiter bevorzugt 0,1 bis 0,5 Gew.-% Diglycerolester und
(D) 0 bis 20 Gew.-% mindestens einem weiteren anorganischen Füllstoff, ausgewählt aus der Gruppe Quarz, Graphit und/oder Glasfüllstoff,
(E) 0 bis 10 Gew.-% weiteren Additiven, ausgewählt aus der Gruppe Flammschutzmittel, Antitropfmittel, Thermostabilisatoren, Entformungsmittel, Antioxidantien, UV-Absorber, IR-Absorber, Antistatika, optische Aufheller, Lichtstreumittel, Farbmittel wie Pigmente, auch anorganischen Pigmente, Ruß und/oder Farbstoffe.

Die Herstellung der erfindungsgemäßen Polymer-Zusammensetzungen, enthaltend die Komponenten A bis C, ggf. D und ggf. weitere Additive, erfolgt mit gängigen Einarbeitungsverfahren durch Zusammenführung, Vermischen und Homogenisieren der einzelnen Bestandteile, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulververmischungen.

Es können auch Vormischungen aus Granulaten oder Granulaten und Pulvern mit den Komponenten B bis D und ggf. den weiteren Additiven verwendet werden.

Es können auch Vormischungen verwendet werden, die aus Lösungen der Mischungskomponenten in geeigneten Lösungsmitteln hergestellt worden sind, wobei gegebenenfalls in Lösung homogenisiert wird und das Lösungsmittel anschließend entfernt wird.

Insbesondere können hierbei die Komponenten B bis D und ggf. die weiteren Additive der erfindungsgemäßen Zusammensetzung durch bekannte Verfahren oder als Masterbatch in das Polycarbonat eingebracht werden.

Die Verwendung von Masterbatchen ist zum Einbringen der Komponenten B bis D und ggf. der weiteren Additive, einzeln oder in Mischung, bevorzugt.

Die erfindungsgemäßen thermoplastischen Zusammensetzungen können in bekannter Weise aufgearbeitet und zu beliebigen Formkörpern verarbeitet werden.

In diesem Zusammenhang kann die erfindungsgemäße Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden.

Die Zusammenführung und Durchmischung einer Vormischung in der Schmelze kann auch in der Plastifiziereinheit einer Spritzgussmaschine erfolgen. Hierbei wird die Schmelze im anschließenden Schritt direkt in einen Formkörper überführt.

Erfindungsgemäße Zusammensetzungen sind zur Herstellung von Komponenten einer elektrischen oder elektronischen Baugruppe, einem Motorenteil oder eines Wärmetauschers wie beispielsweise Lampenfassungen, Wärmesenken und Kühler bzw. Kühlkörper für Platinen geeignet.

Bevorzugt werden die erfindungsgemäßen Zusammensetzungen für die Herstellung von Wärmetauschern, wie beispielsweise Wärmesenken und Kühlkörpern, eingesetzt.

## Beispiele

### 1. Beschreibung der Rohstoffe und Prüfmethoden

Die erfindungsgemäßen Polycarbonatzusammensetzungen wurden auf üblichen Maschinen, und zwar Mehrwellenextrudern, durch Compoundierung, gegebenenfalls unter Zugabe von Additiven und anderen Zuschlagstoffen, bei Temperaturen zwischen 300°C und 330°C hergestellt.

Die erfindungsgemäßen Compounds zu den folgenden Beispielen wurden auf einem Extruder ZE 25 der Fa. Berstorff mit einem Durchsatz von 10 kg/h hergestellt. Die Schmelzetemperatur betrug 315 °C.

Es wurden als Polycarbonatbasis A Mischungen aus den Komponenten A-1 und A-2 eingesetzt.

**Komponente A-1:**

Lineares Polycarbonat auf Basis von Bisphenol A mit einer Schmelze-Volumenfließrate MVR von 19,0 $cm^3$/10 min (gemäß ISO 1133 (DIN EN ISO 1133-1:2012-03), bei einer Prüftemperatur 300°C und 1,2 kg Belastung).

**Komponente A-2:**

Lineares Polycarbonat in Pulverform auf Basis von Bisphenol A mit einer Schmelze-Volumenfließrate MVR von 19,0 $cm^3$/10 min (gemäß ISO 1133 (DIN EN ISO 1133-1:2012-03), bei einer Prüftemperatur von 300°C und 1,2 kg Belastung).

**Komponente B-1:**

Bornitrid CoolFlow 600 von Momentive Performance Materials mit einer mittleren Partikelgröße von ca. 16 µm, einem D10/D90-Verhältnis von ca. 6/55 sowie einer spezifischen Oberfläche von ca. 8 $m^2$/g, ermittelt nach DIN ISO 9277 (DIN-ISO 9277:2014-01).

**Komponente B-2:**

Bornitrid Carbotherm PCTP30D von Saint-Gobain mit einer mittleren Partikelgröße von ca. 180 µm und einer spezifischen Oberfläche von ca. 1 $m^2$/g, ermittelt nach DIN ISO 9277 (DIN-ISO 9277:2014-01).

**Komponente C-1:**

Poem DL-100 (Diglycerolmonolaurat) der Fa. Riken Vitamin als Fließhilfsmittel.

**Komponente C-2:**

Bisphenol-A-diphosphat Reofos® BAPP von Chemtura Corporation als Fließhilfsmittel.

**Komponente D-1:**

Gebranntes Siliciumdioxid Amosil FW 600 von Quarzwerke GmbH in Frechen mit einer mittleren Partikelgröße von ca. 4 µm, einem D10/D90-Verhältnis von ca. 1,5/10 µm sowie einer spezifischen Oberfläche von ca. 6 $m^2$/g, ermittelt nach DIN ISO 9277 (DIN-ISO 9277:2014-01).

**Komponente D-2:**

Siliciumdioxid Sikron SF600 von Quarzwerke GmbH in Frechen mit einer mittleren Partikelgröße von 3 µm und einer spezifischen Oberfläche von 4,4 $m^2$/g, ermittelt nach DIN ISO 9277 (DIN-ISO 9277:2014-01).

**Komponente D-3:**

Expandierter Graphit Ecophit® GFG 1200 von der Firma SGL Carbon GmbH mit einem D(0,5) von 1200 µm.

**Komponente E-1:**

Pentaerythritoltetrastearat, kommerziell verfügbar als Loxiol VPG 861 von der Firma Emery Oleochemicals Group.

**Komponente E-2:**

Kalium-nonafluor-1-butansulfonat (Bayowet®C4) von der Firma Lanxess, Leverkusen, Deutschland (CAS-Nr. 29420-49-3).

**Komponente E-3:**

Polytetrafluorethylen Blendex® B449 (ca. 50 Gew.-% PTFE und ca. 50 Gew.-% SAN [aus 80 Gew.-% Styrol und 20 Gew.-% Acrylnitril]) der Firma Chemtura Corporation.

Die Vicat-Erweichungstemperatur VST/B50 als Maß für die Wärmeformbeständigkeit wurde gemäß ISO 306 (ISO 306:2013-11) an Prüfkörpern der Abmessung 80 mm x 10 mm x 4 mm mit einer Stempellast von 50 N und einer Aufheizgeschwindigkeit von 50°C/h mit dem Gerät Coesfeld Eco 2920 der Firma Coesfeld Materialtest bestimmt.

Das E-Modul wurde gemäß EN ISO 527-1 und -2 an einseitig angespritzten Schulterstäben mit einem Kern der Dimension 80 mm x 10 mm x 4 mm bei einer Vorschubgeschwindigkeit von 1 m/min gemessen.

Die Bestimmung des Schmelze-Volumenfließrate (MVR) erfolgte nach ISO 1133 (DIN EN ISO 1133-1:2012-03, bei einer Prüftemperatur von 300 °C, Masse 2,16 kg, 4 min) mit dem Gerät Zwick 4106 der Firma Zwick Roell.

Die Wärmeleitfähigkeit in Spritzgussrichtung (in-plane) bei 23°C wurde bestimmt gemäß ASTM E 1461 (ASTM E 1461:2013) an Proben mit der Dimension von 80 mm x 80 mm x 2 mm.

Die Wärmeleitfähigkeit in Spritzgussrichtung (through-plane) bei 23°C wurde bestimmt gemäß ASTM E 1461 an Proben mit der Dimension von 80 mm x 80 mm x 2 mm.

Der spezifische Durchgangswiderstand wurde nach DIN IEC 60093 (DIN IEC 60093:1993-12) ermittelt.

**2. Zusammensetzungen und deren Eigenschaften**

Nicht ermittelte Ergebnisse sind durch "n.b." (nicht bestimmt) gekennzeichnet.

**Tabelle 1: Vergleichsversuch V1 und Zusammensetzungen B1 und B2, enthaltend unterschiedliche Mengen Diglycerolester**

| **Komponente** | | | **V1** | **B1** | **B2** |
|---|---|---|---|---|---|
| A-1 | Gew.-% | | 62,5 | 62,5 | 62,5 |
| A-2 | Gew.-% | | 7,5 | 7,2 | 7,0 |
| B-1 | Gew.-% | | 30,0 | 30,0 | 30,0 |
| C-1 | Gew.-% | | 0 | 0,3 | 0,5 |
| **Ergebnisse** | | | | | |
| MVR | ISO 1133 | $cm^3$/[10 min] | 11,0 | 31,1 | 60,6 |
| E-Modul | ISO 527 | GPa | 6,4 | 6,3 | 6,4 |
| Vicat - VST/B50 | ISO 306 | °C | 149,5 | 140,2 | 136,3 |
| Wärmeleitfähigkeit | in-plane | W/(m·K) | 3,0 | n.b. | 3,3 |
| Wärmeleitfähigkeit | through-plane | W/(m·K) | 0,4 | n.b. | 0,5 |

Tabelle 1 verdeutlicht, dass der Zusatz von Komponente C-1, d.h. dem Diglycerolester, zu einem Gemisch aus den Komponenten A und B-1 eine deutliche Verbesserung der Fließfähigkeit bewirkt. Das E-Modul ist unabhängig von der Zugabe der Komponente C-1. Die Wärmeformbeständigkeit, für welche die Vicat-Temperatur ein Indikator ist, sinkt geringfügig mit zunehmendem Gehalt Diglycerolester, jedoch ist das erzielte hohe Niveau ausreichend für den Einsatz in Bauteilen in der E/E- sowie IT-Industrie. Die für eine signifikante Erhöhung der Fließfähigkeit der Bornitridhaltigen Polycarbonatzusammensetzungen benötigte Menge an Diglycerolester ist gering.

**Tabelle 2: Bornitrid-haltige Zusammensetzungen enthaltend Diglycerolester**

| Komponente | | | B3 | B4 | B5 | B6 | B7 | B8 | B9 | B10 |
|---|---|---|---|---|---|---|---|---|---|---|
| A-1 | Gew.-% | | 86,8 | 81,8 | 76,8 | 71,8 | 86,6 | 81,6 | 76,6 | 71,6 |
| A-2 | Gew.-% | | 3,0 | 3,0 | 3,0 | 3,0 | 3,0 | 3,0 | 3,0 | 3,0 |
| B-1 | Gew.-% | | 10,0 | 15,0 | 20,0 | 25,0 | 10,0 | 15,0 | 20,0 | 25,0 |
| C-1 | Gew.-% | | 0,2 | 0,2 | 0,2 | 0,2 | 0,4 | 0,4 | 0,4 | 0,4 |
| Ergebnisse | | | | | | | | | | |
| MVR | ISO 1133 | $cm^3$/[10 min] | 55,7 | 48,8 | 54,6 | 50,4 | 90,5 | n.b. | 77,4 | 56,0 |
| E-Modul | ISO 527 | GPa | 3,3 | 3,8 | 4,3 | 5,3 | 3,3 | 3,9 | 4,4 | 5,0 |
| Vicat - VST/B50 | ISO 306 | °C | 142,2 | 140,9 | 140,4 | 141,1 | 138,2 | 137,5 | 135,4 | 139,4 |
| Wärmeleitfähigkeit | in-plane | W/(m·K) | 0,5 | 0,7 | 0,9 | 1,1 | 0,5 | 0,6 | 0,9 | 1,2 |
| Wärmeleitfähigkeit | through-plane | W/(m·K) | 0,3 | 0,3 | 0,3 | 0,4 | 0,3 | 0,3 | 0,4 | 0,4 |

Tabelle 2 verdeutlicht, dass der Zusatz von Diglycerolester, Komponente C-1, zu einem Gemisch aus den Komponenten A und B-1 eine deutliche Verbesserung der Fließfähigkeit bewirkt, wobei der Effekt auch bei hohen Gehalten von Bornitrid sichtbar ist. Das E-Modul sowie die Wärmeleitfähigkeit sind unabhängig von der Zugabe des Diglycerolesters und werden nur durch die Menge an Bornitrid bestimmt. Die Wärmeformbeständigkeit wird durch die Zugabe des Diglycerolesters nur geringfügig beeinflusst.

**Tabelle 3**

| Komponente | | | V2 | B11 | V3 | B12 | B13 |
|---|---|---|---|---|---|---|---|
| A-1 | Gew.-% | | 47,5 | 47,5 | 50,0 | 50,0 | 76,5 |
| A-2 | Gew.-% | | 7,5 | 7,2 | 5,0 | 4,7 | 3,0 |
| B-1 | Gew.-% | | 30,0 | 30,0 | 30,0 | 30,0 | 10,0 |
| C-1 | Gew.-% | | 0,0 | 0,3 | 0,0 | 0,3 | 0,5 |
| D-1 | Gew.-% | | 15,0 | 15,0 | | | |
| D-2 | Gew.-% | | | | 15,0 | 15,0 | |
| D-3 | Gew.-% | | | | | | 10,0 |
| Ergebnisse | | | | | | | |
| MVR | ISO 1133 | $cm^3$/[10 min] | 9,6 | 25,4 | 7,4 | 13,6 | 30,2 |
| E-Modul | ISO 527 | GPa | 8,3 | 8,7 | 8,9 | 8,2 | 4,0 |
| Vicat - VST/B50 | ISO 306 | °C | 143,5 | 137,8 | 149,0 | 143,0 | 137,6 |
| Wärmeleitfähigkeit | in-plane | W/(m·K) | n.b. | n.b. | 3,7 | 3,1 | 3,0 |
| Wärmeleitfähigkeit | through-plane | W/(m·K) | n.b. | n.b. | 0,6 | 0,7 | 0,6 |

Tabelle 3 verdeutlicht, dass der Zusatz von Komponente C-1, Diglycerolester, zu einem Gemisch aus den Komponenten A, B-1 und verschiedenen Komponenten D (Silicumdioxid) eine deutliche Verbesserung der Fließfähigkeit bewirkt. Die Verbesserung tritt unabhängig von der Art des Siliciumdioxids ein. Das E-Modul ist unabhängig von der Zugabe der Komponente C-1. Die Wärmeformbeständigkeit sinkt geringfügig mit zunehmendem Gehalt an Komponente C-1, verbleibt aber auf einem ausreichend hohen Niveau.

**Tabelle 4**

| **Komponente** | | | **V4** | **B14** |
|---|---|---|---|---|
| A-1 | Gew.-% | | 57,35 | 63,95 |

(fortgesetzt)

| Komponente | | | V4 | B14 |
|---|---|---|---|---|
| A-2 | Gew.-% | | 5 | 5 |
| B-2 | Gew.-% | | 30 | 30 |
| C-1 | Gew.-% | | | 0,4 |
| C-2 | Gew.-% | | 7 | |
| E-1 | Gew.-% | | 0,4 | 0,4 |
| E-2 | Gew.-% | | 0,15 | 0,15 |
| E-3 | Gew.-% | | 0,1 | 0,1 |
| **Ergebnisse** | | | | |
| MVR (300°C, 1,2 kg, 6 min) | ISO 1133 | $cm^3$/[10 min] | 13,7 | 49,2 |
| E-Modul | ISO 527 | GPa | 5,9 | 5,2 |
| Vicat - VST/B50 | ISO 306 | °C | 106,9 | 130,7 |

Ein Vergleich der Versuche V4 mit B14 zeigt die deutliche Erniedrigung der Wärmeformbeständigkeit der Formmasse enthaltend BDP (Komponente C-2).

## Patentansprüche

1. Thermoplastische Zusammensetzung, enthaltend

   (A) mindestens ein thermoplastisches Polymer,
   (B) Bornitrid und
   (C) mindestens ein Fließhilfsmittel,

   **dadurch gekennzeichnet, dass** das Fließhilfsmittel aus der Gruppe der Diglycerolester ausgewählt ist.

2. Thermoplastische Zusammensetzung nach Anspruch 1, **dadurch gekennzeichnet, dass** als Diglycerolester ein Ester der Formel (I)

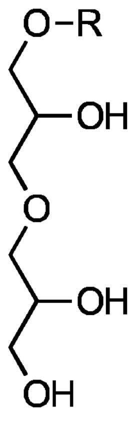

(I)

   mit R = $COC_nH_{2n+1}$ und/oder R = COR',
   wobei n eine ganze Zahl ist und wobei R' ein verzweigter Alkylrest oder ein verzweigter oder unverzweigter Alkenylrest ist und $C_nH_{2n+1}$ ein aliphatischer, gesättigter linearer Alkylrest ist, enthalten ist.

3. Thermoplastische Zusammensetzung nach Anspruch 1 oder 2, **dadurch gekennzeichnet, dass** R = $COC_nH_{2n+1}$

ist, wobei n eine ganze Zahl von 6-24, bevorzugt 8 bis 18, weiter bevorzugt 10 bis 16, besonders bevorzugt 12 ist.

4. Thermoplastische Zusammensetzung nach einem der vorhergehenden Ansprüche, **dadurch gekennzeichnet, dass** die Zusammensetzung

    (A) 27,8 bis 90 Gew.-% thermoplastisches Polymer,
    (B) 1 bis 60 Gew.-% Bornitrid,
    (C) 0,01 bis 3,0 Gew.-% Diglycerolester enthält.

5. Thermoplastische Zusammensetzung nach einem der vorhergehenden Ansprüche, **dadurch gekennzeichnet, dass** die Zusammensetzung

    (A) 55 bis 89,8 Gew.-% thermoplastisches Polymer,
    (B) 10 bis 30 Gew.-% Bornitrid,
    (C) 0,2 bis 0,5 Gew.-% Diglycerolester enthält.

6. Thermoplastische Zusammensetzung nach einem der vorhergehenden Ansprüche, **dadurch gekennzeichnet, dass** die Zusammensetzung mindestens einen weiteren anorganischen Füllstoff, ausgewählt aus der Gruppe Quarz, Graphit und/oder Glasfüllstoff, enthält.

7. Thermoplastische Zusammensetzung nach einem der vorhergehenden Ansprüche, **dadurch gekennzeichnet, dass** das thermoplastische Polymer Polycarbonat ist.

8. Thermoplastische Zusammensetzung nach einem der vorhergehenden Ansprüche, **dadurch gekennzeichnet, dass** die Zusammensetzung 5,0 bis 20,0 Gew.-% anorganischen Füllstoff als Komponente D, ausgewählt aus der Gruppe Graphit, Quarz und/oder Glasfüllstoff, enthält.

9. Thermoplastische Zusammensetzung nach einem der Ansprüche 1 bis 3 oder 7, bestehend aus

    (A) 50 bis 79,6 Gew.-% thermoplastischem Polymer,
    (B) 10,0 bis 30,0 Gew.-% Bornitrid,
    (C) 0,01 bis 3,0 Gew.-% Diglycerolester,
    (D) 0 bis 20 Gew.-% mindestens einem weiteren anorganischen Füllstoff, ausgewählt aus der Gruppe Quarz, Graphit und/oder Glasfüllstoff, und
    (E) 0 bis 10 Gew.-% weiteren Additiven, ausgewählt aus der Gruppe Flammschutzmittel, Antitropfmittel, Thermostabilisatoren, Entformungsmittel, Antioxidantien, UV-Absorber, IR-Absorber, Antistatika, optische Aufheller, Lichtstreumittel, Farbmittel wie Pigmente, auch anorganischen Pigmente, Ruß und/oder Farbstoffe.

10. Formteil, hergestellt aus einer thermoplastischen Zusammensetzung nach einem der vorhergehenden Ansprüche.

11. Formteil nach Anspruch 10, **dadurch gekennzeichnet, dass** das Formteil eine Wärmesenke oder ein Kühlkörper ist.

## Claims

1. Thermoplastic composition comprising

    (A) at least one thermoplastic polymer,
    (B) boron nitride and
    (C) at least one flow enhancer

    **characterized in that** the flow enhancer is selected from the group of the diglycerol esters.

2. Thermoplastic composition according to Claim 1, **characterized in that** the diglycerol ester present is an ester of the formula (I)

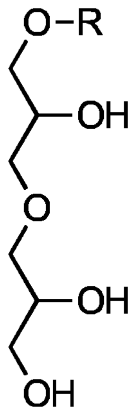

(I)

with R = $COC_nH_{2n+1}$ and/or R = COR',
where n is an integer and where R' is a branched alkyl moiety or a branched or unbranched alkenyl moiety and $C_nH_{2n+1}$ is an aliphatic, saturated linear alkyl moiety.

3. Thermoplastic composition according to Claim 1 or 2, **characterized in that**
R = $COC_nH_{2n+1}$ where n is an integer of 6-24, preferably 8 to 18, further preferably 10 to 16, especially preferably 12.

4. Thermoplastic composition according to any of the preceding claims, **characterized in that** the composition comprises

(A) 27.8% to 90% by weight of thermoplastic polymer,
(B) 1% to 60% by weight of boron nitride,
(C) 0.01% to 3.0% by weight of diglycerol esters.

5. Thermoplastic composition according to any of the preceding claims, **characterized in that** the composition comprises

(A) 55% to 89.8% by weight of thermoplastic polymer,
(B) 10% to 30% by weight of boron nitride,
(C) 0.2% to 0.5% by weight of diglycerol esters.

6. Thermoplastic composition according to any of the preceding claims, **characterized in that** the composition comprises
at least one further inorganic filler
selected from the group of quartz, graphite and/or glass filler.

7. Thermoplastic composition according to any of the preceding claims, **characterized in that** the thermoplastic polymer is polycarbonate.

8. Thermoplastic composition according to any of the preceding claims, **characterized in that** the composition contains 5.0% to 20.0% by weight of inorganic filler as component D, selected from the group of quartz, graphite and/or glass filler.

9. Thermoplastic composition according to any of Claims 1 to 3 or 7, consisting of

(A) 50% to 79.6% by weight of thermoplastic polymer,
(B) 10.0% to 30.0% by weight of boron nitride,
(C) 0.01% to 3.0% by weight of diglycerol ester,
(D) 0% to 20% by weight of at least one further inorganic filler, selected from the group of quartz, graphite and/or glass filler, and
(E) 0% to 10% by weight of further additives, selected from the group of flame retardants, anti-drip agents, thermal stabilizers, demoulding agents, antioxidants, UV absorbers, IR absorbers, antistats, optical brighteners, light-scattering agents, colourants such as pigments, including inorganic pigments, carbon black and/or dyes.

**10.** Moulding produced from a thermoplastic composition according to any of the preceding claims.

**11.** Moulding according to Claim 10, **characterized in that** the moulding is a heat sink or a cooling body.

**Revendications**

**1.** Composition thermoplastique, contenant

(A) au moins un polymère thermoplastique,
(B) du nitrure de bore et
(C) au moins un adjuvant d'écoulement,

**caractérisée en ce que** l'adjuvant d'écoulement est choisi dans le groupe formé par les esters de diglycérol.

**2.** Composition thermoplastique selon la revendication 1, **caractérisée en ce qu'**elle contient, comme ester de diglycérol, un ester de formule (I)

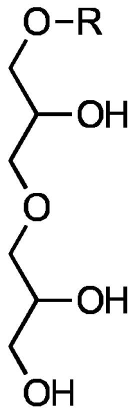

(I)

dans laquelle R = $COC_nH_{2n+1}$ et/ou R = COR',
n représentant un nombre entier et R' représentant un radical alkyle ramifié ou un radical alcényle ramifié ou non ramifié et $C_nH_{2n+1}$ représentant un radical alkyle aliphatique, saturé, linéaire.

**3.** Composition thermoplastique selon la revendication 1 ou 2, **caractérisée en ce que** R = $COC_nH_{2n+1}$, n représentant un nombre entier de 6-24, de préférence de 8 à 18, plus préférablement de 10 à 16, de manière particulièrement préférée 12.

**4.** Composition thermoplastique selon l'une quelconque des revendications précédentes, **caractérisée en ce que** la composition contient

(A) 27,8 à 90% en poids de polymère thermoplastique,
(B) 1 à 60% en poids de nitrure de bore,
(C) 0,01 à 3,0% en poids d'ester de diglycérol.

**5.** Composition thermoplastique selon l'une quelconque des revendications précédentes, **caractérisée en ce que** la composition contient

(A) 55 à 89,8% en poids de polymère thermoplastique,
(B) 10 à 30% en poids de nitrure de bore,
(C) 0,2 à 0,5% en poids d'ester de diglycérol.

**6.** Composition thermoplastique selon l'une quelconque des revendications précédentes, **caractérisée en ce que** la composition contient au moins une autre charge inorganique, choisie dans le groupe formé par le quartz, le graphite et/ou une charge à base de verre.

7. Composition thermoplastique selon l'une quelconque des revendications précédentes, **caractérisée en ce que** le polymère thermoplastique est un polycarbonate.

8. Composition thermoplastique selon l'une quelconque des revendications précédentes, **caractérisée en ce que** la composition contient 5,0 à 20,0% en poids de charge inorganique en tant que composant D, choisi dans le groupe formé par le quartz, le graphite et/ou une charge à base de verre.

9. Composition thermoplastique selon l'une quelconque des revendications 1 à 3 ou 7, constituée par

   (A) 50 à 79,6% en poids de polymère thermoplastique,
   (B) 10,0 à 30,0% en poids de nitrure de bore,
   (C) 0,01 à 3,0% en poids d'ester de diglycérol.
   (D) 0 à 20% en poids d'au moins une autre charge inorganique, choisie dans le groupe formé par le quartz, le graphite et/ou une charge à base de verre et
   (E) 0 à 10% en poids d'autres additifs, choisis dans le groupe formé par les agents ignifuges, les agents antigoutte, les stabilisateurs thermiques, les agents de démoulage, les antioxydants, les absorbants des UV, les absorbants des IR, les antistatiques, les azurants optiques, les agents de dispersion de la lumière, les agents de coloration tels que les pigments, également les pigments inorganiques, la suie et/ou les colorants.

10. Pièce façonnée produite à partir d'une composition thermoplastique selon l'une quelconque des revendications précédentes.

11. Pièce façonnée selon la revendication 10, **caractérisée en ce que** la pièce façonnée est un puits thermique ou un corps de refroidissement.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2008153959 A1
- US 7723419 B1
- US 20120217434 A1
- US 2014077125 A1
- US 2999835 A
- US 3148172 A
- US 2991273 A
- US 3271367 A
- US 4982014 A
- US 2999846 A
- DE 1570703 A
- DE 2063050 A
- DE 2036052 A
- DE 2211956 A
- DE 3832396 A
- FR 1561518 A1
- WO 2004063249 A1
- WO 200105866 A1
- WO 2000105867 A
- US 5340905 A
- US 5097002 A
- US A5717057 A
- US 6652822 B2
- US 20010021740 A1
- US 5898009 A
- US 6048511 A
- US 20050041373 A1
- US 20040208812 A1
- US 6951583 B2
- WO 2008042446 A2
- US 1137373 A
- US 1191383 A
- US 3404061 A
- EP 0839623 A
- WO 9615102 A
- EP 0500496 A


### In der Beschreibung aufgeführte Nicht-Patentliteratur


- **H. SCHNELL.** Chemistry and Physics of Polycarbonates. Interscience Publishers, 1964, 28 ff, , S.102 ff
- **D.G. LEGRAND ; J.T. BENDLER.** Handbook of Polycarbonate Science and Technology. Marcel Dekker, 2000, 72
- **HANS ZWEIFEL.** Plastics Additives Handbook. Hanser Verlag, 2000